(19) Europäisches Patentamt
European Patent Office
Office européen des brevets

(11) EP 4 201 701 B1

(12) # EUROPEAN PATENT SPECIFICATION

(45) Date of publication and mention of the grant of the patent:
**14.08.2024 Bulletin 2024/33**

(21) Application number: **22209977.2**

(22) Date of filing: **28.11.2022**

(51) International Patent Classification (IPC):
***B60C 1/00*** *(2006.01)* ***C08L 7/00*** *(2006.01)*
***B60C 11/00*** *(2006.01)* ***B60C 11/03*** *(2006.01)*

(52) Cooperative Patent Classification (CPC):
(C-Sets available)
**C08L 7/00; B60C 1/0016; B60C 11/005; B60C 11/033;** B60C 2011/0033; B60C 2200/06; Y02T 10/86 (Cont.)

(54) **TIRE**

REIFEN

PNEUMATIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **27.12.2021 JP 2021212688**

(43) Date of publication of application:
**28.06.2023 Bulletin 2023/26**

(73) Proprietor: **Sumitomo Rubber Industries, Ltd.**
**Kobe-shi, Hyogo 651-0072 (JP)**

(72) Inventors:
- **NAKANO, Shinya**
**Kobe-shi, Hyogo, 651-0072 (JP)**
- **KAWAMURA, Takanobu**
**Kobe-shi, Hyogo, 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 3 878 905** **JP-A- 2015 218 254**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 201 701 B1

(52) Cooperative Patent Classification (CPC): (Cont.)

C-Sets
**C08L 7/00, C08L 9/06, C08L 9/06, C08L 91/08, C08K 3/04, C08K 3/36, C08K 5/548, C08K 5/18, C08K 5/3437, C08K 5/09, C08K 3/22, C08K 3/06, C08K 5/31, C08K 5/47;**
**C08L 7/00, C08L 9/06, C08L 25/16, C08L 91/08, C08K 3/04, C08K 3/36, C08K 5/548, C08K 5/18, C08K 5/3437, C08K 5/09, C08K 3/22, C08K 3/06, C08K 5/31, C08K 5/47;**
**C08L 7/00, C08L 9/06, C08L 45/02, C08L 91/08, C08K 3/04, C08K 3/36, C08K 5/548, C08K 5/18, C08K 5/3437, C08K 5/09, C08K 3/22, C08K 3/06, C08K 5/31, C08K 5/47;**
**C08L 7/00, C08L 9/06, C08L 47/00, C08L 91/08, C08K 3/04, C08K 3/36, C08K 5/548, C08K 5/18, C08K 5/3437, C08K 5/09, C08K 3/22, C08K 3/06, C08K 5/31, C08K 5/47;**
**C08L 7/00, C08L 9/06, C08L 57/02, C08L 91/08, C08K 3/04, C08K 3/36, C08K 5/548, C08K 5/18, C08K 5/3437, C08K 5/09, C08K 3/22, C08K 3/06, C08K 5/31, C08K 5/47;**
**C08L 7/00, C08L 9/06, C08L 65/00, C08L 91/08, C08K 3/04, C08K 3/36, C08K 5/548, C08K 5/18, C08K 5/3437, C08K 5/09, C08K 3/22, C08K 3/06, C08K 5/31, C08K 5/47**

## Description

### TECHNICAL FIELD

The present invention relates to a tire rubber composition and a tire comprising a tread composed of the rubber composition.

### BACKGROUND OF THE INVENTION

Suppression of early abrasion of a tread has been conventionally considered. For example, JP 2020-117020 A describes that a depth of a main groove and a shape of a tread surface of a land part are defined, thereby suppressing early abrasion of a middle land part and improving abrasion resistance.

### SUMMARY OF THE INVENTION

However, there is still a problem to be solved regarding suppression of early abrasion in which the tread can be abraded earlier than an expected level under a condition that a large force is applied to the tread for a long time.

It is an object of the present invention to suppress early abrasion under a condition that a large force is applied to a tread for a long time.

As a result of intensive studies, the inventors have found that the above-described problem can be solved by adjusting an amount of an isoprene-based rubber, an amount of a styrene-butadiene rubber, an amount of silica, amounts of a resin and a liquid rubber, and an amount of a plasticizing agent such that these amounts satisfy predetermined relationships, in a tire rubber composition comprising a rubber component comprising the isoprene-based rubber and the styrene-butadiene rubber, a predetermined amount of silica, and the plasticizing agent comprising at least one of the resin and the liquid rubber, and conducted further studies to complete the present invention.

That is, the present invention relates to:

a rubber composition for tire comprising

a rubber component that comprises an isoprene-based rubber and a styrene-butadiene rubber,
silica whose content based on 100 parts by mass of the rubber component is greater than 50 parts by mass, and
a plasticizing agent that comprises at least one of a resin and a liquid rubber,

wherein, when an amount (% by mass) of the isoprene-based rubber in the rubber component is defined as A, an amount (% by mass) of the styrene-butadiene rubber in the rubber component is defined as B, an amount (part by mass) of the silica based on 100 parts by mass of the rubber component is defined as C, an amount (part by mass) of the resin and the liquid rubber based on 100 parts by mass of the rubber component is defined as D, and an amount (part by mass) of the plasticizing agent based on 100 parts by mass of the rubber component is defined as E, the A, B, C, D, and E satisfy the following inequalities (1), (2), and (3).

$$A / B > 3.0 \quad (1)$$

$$B / D < 3.0 \quad (2)$$

$$C / E > 4.0 \quad (3)$$

According to the present invention, a rubber composition for tire that can suppress early abrasion under a condition that a large force is applied to a tire for a long time and improve abrasion resistance and a tire comprising a tread composed of the rubber composition for tire can be provided.

### BRIEF DESCRIPTION OF THE DRAWINGS

FIG. 1 is a cross-sectional view of a tire according to one embodiment of the present invention on a surface including

a rotation axis.

FIG. 2 is a view showing a tread grounding surface in a tire according to one embodiment of the present invention. The surrounded area in FIG. 2 is the tread grounding surface.

DETAILED DESCRIPTION

The present invention is described below. Besides, in the present specification, a numerical range identified with "to" means to include the numerical values of both ends.

The rubber composition according to the present invention is a rubber composition for tire comprising a rubber component that comprises an isoprene-based rubber and a styrene-butadiene rubber, silica whose content based on 100 parts by mass of the rubber component is greater than 50 parts by mass, and a plasticizing agent that comprises at least one of a resin and a liquid rubber, wherein, when an amount (% by mass) of the isoprene-based rubber in the rubber component is defined as A, an amount (% by mass) of the styrene-butadiene rubber in the rubber component is defined as B, an amount (part by mass) of the silica based on 100 parts by mass of the rubber component is defined as C, an amount (part by mass) of the resin and the liquid rubber based on 100 parts by mass of the rubber component is defined as D, and an amount (part by mass) of the plasticizing agent based on 100 parts by mass of the rubber component is defined as E, the A, B, C, D, and E satisfy the following inequalities (1), (2), and (3).

$$A / B > 3.0 \quad (1)$$

$$B / D < 3.0 \quad (2)$$

$$C / E > 4.0 \quad (3)$$

A mechanism by which the rubber composition for tire of the present invention exhibits effects of the present invention is considered as follows, although the following consideration is not intended to be bound by any theory. That is, although abrasion due to crack extension becomes dominant under the condition that a large force is applied to a tire for long time, in the rubber composition for tire of the present invention, it is considered that (a) since the resin or the liquid rubber is compounded, a tan δ of the rubber composition increases and energy loss at a tip of a crack increases, so that the crack extension is suppressed, (b) a styrene-butadiene rubber phase dotted in a matrix of the isoprene-based rubber is softened by compounding the resin or the liquid rubber, so that stress concentration can be reduced and the crack extension is suppressed, (c) silica compounded is preferentially dispersed in the isoprene-based rubber phase and reinforces the phase, etc. Additionally, with cooperation of these (a) to (c), early abrasion is suppressed even under the condition that a large force is applied to a tire for a long time, and thus it is considered that abrasion resistance is improved.

The resin is at least one selected from a group consisting of a styrene-based resin and a coumarone-based resin, and the liquid rubber is preferably a liquid styrene-butadiene rubber.

Since such a resin and such a liquid rubber have high compatibility with the styrene-butadiene rubber, it is considered that the effects of the present invention are easily exhibited.

The right side of the inequality (3) is preferably 5.0.

The reason why such a setting is preferable is that it is considered that the effect of the above-described (c) by silica is easily exhibited.

The D is preferably 5 or more, more preferably 10 or more.

The reason why such a setting is preferable is that the effects of the above-described (a) and (b) by the resin or the liquid rubber are easily exhibited.

The C is preferably 55 or more.

The reason why such a setting is preferable is that it is considered that the effect of the above-described (c) by silica is easily exhibited.

The A is preferably greater than 50.

The reason why such a setting is preferable is that it is considered that the effect of the present invention is easily exhibited by the matrix of the isoprene-based rubber.

An average primary particle size of the silica is preferably less than 30 nm.

The reason why such a setting is preferable is that it is considered that it becomes easy to exhibit an effect of reinforcement with silica.

The tire according to the present invention is a tire comprising a tread that consists of a first layer whose outer

surface constitutes a tread surface and a second layer located on the inner side of the first layer in a tire radial direction or having a tread that further comprises one or two intermediate layers between the first layer and the second layer, the first layer being composed of the above-described rubber composition for tire.

It is considered not only that, when the rubber composition for tire of the present invention is used for the tread first layer directly coming into contact with a road surface, it becomes easier to obtain abrasion resistance by cooperation of the above-described (a) to (c), but also that (d) shock-absorbing capability becomes improved by making the tread have a two-layer structure consisting of a so-called cap tread and a so-called base tread or by making the tread have a multi-layer structure in which one or two intermediate layers are further formed between the cap tread and the base tread, thereby additionally contributing to abrasion resistance. This contribution of (d) can be expected to become larger with an increase from two layers to multiple layers in the tread. Additionally, with cooperation of these (a) to (d), early abrasion is suppressed even under the condition that a large force is applied to a tire for a long time, and thus it is considered that abrasion resistance is improved.

When a land ratio (%) of the tread surface is defined as F, the C, E, and F preferably satisfy the following inequality (4).

$$(C / E) \times F < 10000 \qquad (4)$$

An increase of a value of C/E of the inequality (3) acts such that abrasion resistance of the rubber composition for tire is improved, while an increase of a value of the land ratio (%) of the tread surface acts such that the rigidity of the tire is increased, and it is considered that both of them harmonize with each other in such a manner that they control each other as in the inequality (4), thereby achieving optimal abrasion resistance.

When a thickness (mm) of the tread is defined as G, the A, B, and G preferably satisfy the following inequality (5).

$$(A / B) / G < 1.00 \qquad (5)$$

An increase of a value of A/B of the inequality (1) acts such that abrasion resistance of the rubber composition for tire is improved, while an increase of the thickness of the tread acts such that the rigidity of the tire is increased, and it is considered that both of them harmonize with each other in such a manner that they control each other as in the inequality (5), thereby achieving optimal abrasion resistance.

The tire is preferably a heavy-duty tire.

In a case of a heavy-duty vehicle with a high loading capacity, such as a truck or bus, it is considered that the effects of the present invention are remarkably exhibited.

[Definition]

Unless otherwise noted, a "size or the like of each part of a tire" is defined as a value specified in a standardized state in which a tire is rim-assembled to a standardized rim, filled with a standardized internal pressure, and applied with no load.

The "standardized rim" is a rim defined for each tire in a standard system including a standard, on which the tire is based, by the standard, and refers to, for example, a "standard rim" in applicable sizes described in "JATMA YEAR BOOK" in JATMA (Japan Automobile Tyre Manufacturers Association, Inc), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.). Additionally, if the tire is not defined in the above-described standard system, the "standardized rim" refers to a rim having the smallest rim diameter and secondly having the narrowest rim width among rims that can be rim-assembled to the tire and can retain internal pressure, that is, rims that do not cause air leakage between the rim and the tire.

A "standardized internal pressure" is an air pressure defined for each tire in a standard system including a standard, on which the tire is based, by each standard, i.e., the "MAXIMUM AIR PRESSURE" in JATMA, the maximum value described in the table "TIRE LOAD LIMITS AT VARIOUS COLD INFLATION PRESSURES" in TRA, or "INFLATION PRESSURE" in ETRTO.

A "standardized load" means a load defined in a standard system including a standard, on which the tire is based. The "standardized load" is the "MAXIMUN LOAD CAPACITY" in JATMA, the "maximum value" described in the table "TIRE LOAD LIMITS AT VARIOUS COLD INFLATION PRESSURES" in TRA, or "LOAD CAPACITY" in ETRTO.

A "thickness of a tread" is a thickness of a tread lying on a tire center line and measured in a state where a standardized rim is made to hold a tire that is cut along a plane including a tire rotation axis. For example, in FIG. 1, H corresponds to the thickness of the tread. When the tread surface has a groove on a tread center line, the thickness of

the tread is measured with the groove regarded as being filled. Besides, the thickness of a tread is an average of thicknesses of the tread that are measured at positions of five portions of the tire obtained by rotating the tire in 72 degrees increments in a circumferential direction. Thicknesses of the first layer and other layers of the tread are also measured in the same manner.

In a grounding surface of the tread in a case where a standardized load is applied on a tire that is in a standardized state, a "land ratio" is a ratio (%) of an area of the grounding surface excluding areas of grooves and sipes (effective grounding area) to a total area of the grounding surface in which all of the grooves and the sipes existing in the grounding surface are filled (total grounding area). For example, a portion enclosed by a contour in FIG. 2 represents the grounding surface of the tread in the case where a standardized load is applied on the tire that is in a standardized state. Therefore, the ratio (%) of the area of the grounding surface excluding the areas of the grooves and the sipes (effective grounding area) to the total area of the grounding surface in which all of the grooves and the sipes existing in the grounding surface are filled (total grounding area) becomes the land ratio. Besides, the "total grounding area" and the "effective grounding area" are obtained as an average of areas in grounding shapes at five portions obtained in accordance with an operation described as follows. That is, the grounding shapes are obtained by assembling the tire to a standardized rim, filling the tire with air of a standardized internal pressure, letting the tire stand still at 25°C for 24 hours, applying ink to a tire tread surface, applying a standardized load on the tire to press the tire tread surface on cardboard (a camber angle is 0°), and performing transcription to a paper. The tire is rotated in 72 degrees increments in the circumferential direction, and the transcription is performed at five portions of the tire. An average of areas obtained by contours of obtained grounding shapes at the five portions is the total grounding area. An average of areas of inked portions at the five portions is the effective grounding area.

[Measuring method]

A "styrene content" is calculated by $^1$H-NMR measurement.

A "vinyl bonding amount (1 ,2-bond butadiene unit amount)" is measured by JIS K 6239-2:2017.

A "weight-average molecular weight (Mw)" can be calculated in terms of a standard polystyrene based on measurement values obtained by a gel permeation chromatography (GPC) (GPC-8000 Series manufactured by Tosoh Corporation, detector: differential refractometer, column: TSKGEL SUPERMULTIPORE HZ-M manufactured by Tosoh Corporation).

A "cis content (cis-1,4-bond butadiene unit amount)" is measured by JIS K 6239-2:2017.

An "average primary particle size of silica" can be calculated by measuring 400 or more primary particles of silica observed in the field of view with a transmission electron microscope and calculating an arithmetic average of them. Besides, in a case where shapes of the particles are approximately spherical, a diameter of the sphere is defined as a particle size. In a case where the particles have needle-like or rod-like shapes, a minor radius of each of the particles is defined as a particle size. In a case where the particles have indefinite shapes, an average of the major radius and the minor radius of each of the particles is defined as a particle size.

A "$N_2$SA of carbon black" is a value calculated by JIS K 6217-2:2017.

A "$N_2$SA of silica" is a value measured by a BET method according to ASTM D3037-93.

A "softening point" is a temperature at which a sphere drops when the softening point specified in JIS K 6220-1: 2015 is measured with a ring and ball softening point measuring device.

[Rubber composition]

The rubber composition of the present invention will be described below. The rubber composition of the present invention is a rubber composition for tire comprising a rubber component that comprises an isoprene-based rubber and a styrene-butadiene rubber, silica whose content based on 100 parts by mass of the rubber component is greater than 50 parts by mass, and a plasticizing agent that comprises at least one of a resin and a liquid rubber, wherein, when an amount (% by mass) of the isoprene-based rubber in the rubber component is defined as A, an amount (% by mass) of the styrene-butadiene rubber in the rubber component is defined as B, an amount (part by mass) of silica based on 100 parts by mass of the rubber component is defined as C, an amount (part by mass) of the resin and the liquid rubber based on 100 parts by mass of the rubber component is defined as D, and an amount (part by mass) of the plasticizing agent based on 100 parts by mass of the rubber component is defined as E, the A, B, C, D, and E satisfy predetermined relationships.

<Rubber component>

The rubber composition of the present invention comprises, as a rubber component, an isoprene-based rubber and a styrene-butadiene rubber (SBR).

(Isoprene-based rubber)

As an isoprene-based rubber, for example, those common in the tire industry can be used, such as an isoprene rubber (IR) and a natural rubber. Examples of the natural rubber include a non-modified natural rubber (NR), as well as a modified natural rubber such as an epoxidized natural rubber (ENR), a hydrogenated natural rubber (HNR), a deproteinized natural rubber (DPNR), an ultra pure natural rubber, a grafted natural rubber, and the like. Among them, the natural rubber is preferable, and the non-modified natural rubber (NR) is more preferable. These isoprene-based rubbers may be used alone, or two or more thereof may be used in combination.

The NR is not particularly limited, and those common in the tire industry can be used, examples of which include, for example, SIR20, RSS#3, TSR20, and the like.

A content of the isoprene-based rubber in the rubber component is preferably greater than 50% by mass, more preferably greater than 60% by mass, further preferably 70% by mass or more, further preferably greater than 70% by mass. On the other hand, the content of the isoprene-based rubber is less than 100% by mass, preferably less than 95% by mass, more preferably less than 90% by mass, further preferably less than 85% by mass.

(SBR)

The SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR and a modified SBR are preferable. Additionally, hydrogenated ones of these SBR (hydrogenated SBR) and the like can be also used. These SBRs may be used alone, or two or more thereof may be used in combination.

An oil-extended SBR or a non-oil extended SBR can be also used as a SBR. When the oil-extended SBR is used, an oil-extending amount of the SBR, that is, a content of an extending oil in the SBR is preferably 10 to 50 parts by mass based on 100 parts by mass of a rubber solid content of the SBR.

Examples of the S-SBR that can be used in the present invention include those commercially available from JSR Corporation, Sumitomo Chemical Co., Ltd., Ube Industries, Ltd., Asahi Kasei Corporation, ZS Elastomer Co., Ltd., ARLANXEO, etc.

The modified SBR may be one modified at a main chain and/or a terminal thereof with a modifying agent or one modified with a polyfunctional modifying agent such as, for example, tin tetrachloride or silicon tetrachloride to partly have a branched structure, preferably a SBR modified at a main chain and/or a terminal thereof with a modifying agent having a functional group that interacts with silica (modified BR for silica). Particularly, the first layer and/or the second layer preferably comprises a modified SBR.

Examples of the above-described functional group interacting with silica include, for example, an amino group, an amide group, an alkoxysilyl group, an isocyanate group, an imino group, an imidazole group, an urea group, an ether group, a carbonyl group, an oxycarbonyl group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydrocarbon group, a hydroxyl group, an oxy group, an epoxy group, etc. Besides, these functional groups may each have a substituent. Among them, from the viewpoint of improving dispersibility of silica, the amino group, the epoxy group, the hydroxyl group, the alkoxy group, and the alkoxysilyl group are preferable, and the amino group and the alkoxysilyl group are more preferable.

A styrene content of the SBR is preferably greater than 10% by mass, more preferably greater than 15% by mass, further preferably greater than 20% by mass, from the viewpoints of wet grip performance and abrasion resistance. Moreover, it is preferably less than 60% by mass, more preferably less than 55% by mass, further preferably less than 50% by mass, from the viewpoints of temperature dependency of grip performance and blow resistance. Besides, in the present specification, the styrene content of the SBR is calculated by the above-described method.

A vinyl content of the SBR is preferably greater than 10 mol%, more preferably greater than 13 mol%, further preferably greater than 15 mol%, from the viewpoints of ensuring reactivity with silica, wet grip performance, rubber strength, and abrasion resistance. Moreover, the vinyl content of the SBR is preferably less than 70 mol%, more preferably less than 60 mol%, further preferably less than 40 mol%, from the viewpoints of prevention of increase in temperature dependency, elongation at break, and abrasion resistance. Besides, in the present specification, the vinyl content of the SBR (1,2-bond butadiene unit amount) is measured by the above-described method.

A weight-average molecular weight (Mw) of the SBR is preferably greater than 200,000, more preferably greater than 250,000, further preferably greater than 300,000, from the viewpoint of wet grip performance. Moreover, the weight-average molecular weight is preferably less than 2,000,000, more preferably less than 1,500,000, further preferably less than 1,000,000, from the viewpoint of cross-linking uniformity. Besides, in the present specification, the weight-average molecular weight of the SBR is calculated by the above-described method.

A content of the SBR in the rubber component is preferably greater than 0% by mass, more preferably greater than 5% by mass, further preferably greater than 10% by mass. On the other hand, the content of the SBR is preferably less than 50% by mass, more preferably less than 40% by mass, further preferably less than 30% by mass, further preferably less than 25% by mass, further preferably less than 20% by mass.

(Other rubber components)

The rubber component according to the present invention may comprise rubber components other than the above-described isoprene-based rubber and SBR. A cross-linkable rubber component commonly used in the tire industry can be used as another rubber component, examples of which include, for example, a butadiene rubber (BR), a styrene-isoprene-butadiene copolymer rubber (SIBR), a styrene-isobutylene-styrene block copolymer (SIBS), a chloroprene rubber (CR), an acrylonitrile-butadiene rubber (NBR), a hydrogenated nitrile rubber (HNBR), a butyl rubber (IIR), an ethylene propylene rubber, a polynorbornene rubber a silicone rubber, a polyethylene chloride rubber, a fluororubber (FKM), an acrylic rubber (ACM), a hydrin rubber, and the like. These other rubber components may be used alone, or two or more thereof may be used in combination.

(BR)

The BR is not particularly limited, and those common in the tire industry can be used, such as, for example, a BR having a cis content less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). These BRs may be used alone, or two or more thereof may be used in combination.

As the high cis BR, for example, those commercially available form Zeon Corporation, Ube Industries, Ltd., JSR Corporation, etc. can be used. The cis content is preferably greater than 94 mol%, more preferably greater than 95 mol%, further preferably 96 mol% or more, further preferably 98 mol% or more. Besides, in the present specification, the cis content (cis-1,4-bond butadiene unit amount) is a value calculated by the above-described method.

As the rare-earth-based BR, those that are synthesized using a rare-earth element-based catalyst and have a vinyl content of preferably less than 1.8 mol%, more preferably less than 1.0 mol%, further preferably less than 0.8 mol%, and a cis content of preferably greater than 94 mol%, more preferably greater than 95 mol%, further preferably 96 mol% or more, further preferably 98 mol% or more, can be used. As the rare-earth-based BR, for example, those commercially available from LANXESS, ARLANXEO, etc. can be used.

Examples of the SPB-containing BR include those in which 1,2-syndiotactic polybutadiene crystal is chemically bonded with BR and dispersed, but not those in which the crystal is simply dispersed in the BR. As such a SPB-containing BR, those commercially available from Ube Industries, Ltd., etc. can be used.

Examples of the modified BR include those obtained by adding a tin compound after polymerizing 1,3-butadiene by a lithium initiator, the terminal of which is further bonded by tin-carbon bond (tin-modified BRs), a butadiene rubber whose main chain and/or terminal is modified with the above-described modifying agent having a functional group interacting with silica (modified BR for silica), and the like. Moreover, the modified BR may be either non-hydrogenated or hydrogenated.

A weight-average molecular weight (Mw) of the BR is preferably greater than 300,000, more preferably greater than 350,000, further preferably greater than 400,000, from the viewpoint of abrasion resistance. Moreover, it is preferably less than 2,000,000, more preferably less than 1,500,000, further preferably less than 1,000,000, from the viewpoint of cross-linking uniformity. Besides, the weight-average molecular weight of the BR can be calculated by the above-described method.

A content of the BR in the rubber component is preferably less than 20% by mass, more preferably less than 15% by mass, further preferably less than 10% by mass.

A content of the BR in the rubber composition of the first layer is preferably greater than 0% by mass, more preferably greater than 5% by mass, further preferably greater than 10% by mass. A content of the BR in the rubber composition of the intermediate layer is preferably greater than 0% by mass, more preferably greater than 3% by mass, further preferably greater than 7% by mass. A content of the BR in the rubber composition of the second layer is preferably greater than 0% by mass, more preferably greater than 0.5% by mass, further preferably 1.0% by mass or more.

As a preferred aspect of the rubber component, for example, the rubber component preferably consists of an isoprene-based rubber and a SBR. In this case, regarding a compounding ratio of the isoprene-based rubber and SBR, if the content of one of them described above respectively is determined, the remaining content of the other is accordingly determined as a difference between them.

<Filler>

The rubber composition according to the present invention comprises a given amount of silica.

(Silica)

Silica is not particularly limited, and those common in the tire industry can be used, such as, for example, silica prepared by a dry process (anhydrous silica) and silica prepared by a wet process (hydrous silica). Among them, hydrous silica prepared by a wet process is preferable from the reason that it has many silanol groups. Silica may be used alone, or two or more thereof may be used in combination.

A nitrogen adsorption specific surface area ($N_2SA$) of silica is preferably greater than 120 $m^2/g$, more preferably greater than 140 $m^2/g$, further preferably greater than 160 $m^2/g$, further preferably greater than 170 $m^2/g$, further preferably greater than 180 $m^2/g$, further preferably greater than 190 $m^2/g$, further preferably greater than 200 $m^2/g$, further preferably greater than 210 $m^2/g$, further preferably greater than 220 $m^2/g$, further preferably 230 $m^2/g$ or more, from the viewpoint of chipping resistance. Moreover, it is preferably less than 350 $m^2/g$, more preferably less than 300 $m^2/g$, further preferably less than 280 $m^2/g$, further preferably less than 250 $m^2/g$, from the viewpoints of fuel efficiency and processability. Besides, the $N_2SA$ of silica in the present specification is a value measured by the above-described method.

The average primary particle size of silica is preferably less than 30 nm, more preferably less than 25 nm, further preferably less than 20 nm, further preferably less than 19 nm, further preferably less than 18 nm, further preferably less than 17 nm, further preferably less than 16 nm, further preferably 15 nm or less. A lower limit of the average primary particle size may be, but not particularly limited to, for example, greater than 1 nm, greater than 3 nm, greater than 5 nm, or greater than 10 nm. Besides, the average primary particle size of silica can be measured by the above-described method.

A content of silica based on 100 parts by mass of the rubber component is preferably greater than 50 parts by mass, more preferably 55 parts by mass or more, further preferably greater than 60 parts by mass, further preferably greater than 65 parts by mass, further preferably greater than 70 parts by mass. On the other hand, the content of silica is preferably less than 200 parts by mass, more preferably less than 150 parts by mass, further preferably less than 120 parts by mass, further preferably 110 parts by mass or less, further preferably less than 100 parts by mass.

(Other fillers)

As a filler, in addition to the above-described silica, yet another filler may be used. Such a filler is not particularly limited, and any fillers generally used in the tire industry can be used, such as, for example, carbon black, aluminum hydroxide, alumina (aluminum oxide), calcium carbonate, magnesium sulfate, talc, and clay. These fillers may be used alone, or two or more thereof may be used in combination.

(Carbon black)

As carbon black, those commonly used in the tire industry can be appropriately used. Carbon black may be used alone, or two or more thereof may be used in combination.

Carbon black is not particularly limited, and those common in the tire industry can be used, such as GPF, FEF, HAF, ISAF, and SAF. Specifically, N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, N991, and the like can be appropriately used, and in-house synthesized products and the like can also be appropriately used in addition to them. These carbon black may be used alone, or two or more thereof may be used in combination.

A nitrogen adsorption specific surface area ($N_2SA$) of carbon black is preferably greater than 50 $m^2/g$, more preferably greater than 80 $m^2/g$, further preferably greater than 100 $m^2/g$, from the viewpoints of weather resistance and reinforcing property. Moreover, it is preferably less than 250 $m^2/g$, more preferably less than 220 $m^2/g$, further preferably less than 200 $m^2/g$, from the viewpoints of dispersibility, fuel efficiency, fracture characteristics, and durability. Besides, the $N_2SA$ of carbon black is measured by the above-described measuring method.

As carbon black, those manufactured and sold by ASAHI CARBON CO., LTD., Cabot Japan K.K., TOKAI CARBON CO., LTD., Mitsubishi Chemical Corporation., Lion Corporation., NIPPON STEEL Carbon Co., Ltd., Columbia Carbon Corporation., etc. and the like can be used.

A content of carbon black based on 100 parts by mass of the rubber component is preferably greater than 1 part by mass, more preferably greater than 3 parts by mass, further preferably 5 parts by mass or more. On the other hand, the content of carbon black is preferably less than 150 parts by mass, more preferably less than 100 parts by mass, further preferably less than 50 parts by mass, further preferably less than 30 parts by mass, further preferably

less than 20 parts by mass, further preferably less than 15 parts by mass, further preferably less than 10 parts by mass.

A total content of silica and carbon black based on 100 parts by mass of the rubber component is preferably greater than 55 parts by mass, more preferably 60 parts by mass or more, further preferably greater than 70 parts by mass, further preferably greater than 80 parts by mass. Moreover, the total content is preferably less than 200 parts by mass, more preferably less than 150 parts by mass, further preferably less than 110 parts by mass, further preferably less than 100 parts by mass.

As a preferred aspect of the filler, the filler consists of silica and carbon black. In this case, regarding the contents of silica and carbon black, in addition to the contents described above respectively, if the above-described total content and the content of one of them are determined, the remaining content of the other is accordingly determined as a difference between them.

(Silane coupling agent)

A silane coupling agent can be used for the rubber composition of the present invention. The silane coupling agent is not particularly limited, and any silane coupling agents conventionally used in combination with silica in the tire industry can be used, such as, for example, sulfide-based silane coupling agents such as bis(3-triethoxysilylpropyl)disulfide and bis(3-triethoxysilylpropyl)tetrasulfide; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycidoxy-based silane coupling agents such as $\gamma$-glycidoxypropyltriethoxysilane and $\gamma$-glycidoxypropyltrimethoxysilane; nitro-based silane coupling agents such as 3-nitropropyltrimethoxysilane and 3-nitropropyltriethoxysilane; and chloro-based silane coupling agents such as 3-chloropropyltrimethoxysilane and 3-chloropropyltriethoxysilane; a mercapto-based silane coupling agent. Among them, the sulfide-based silane coupling agents and/or the mercapto-based silane coupling agent are preferable. These silane coupling agents may be used alone, or two or more thereof may be used in combination.

The mercapto-based silane coupling agent is preferably a compound represented by the following chemical formula (1) and/or a compound comprising a bond unit A represented by the following chemical formula (2) and a bond unit B represented by the following formula (3).

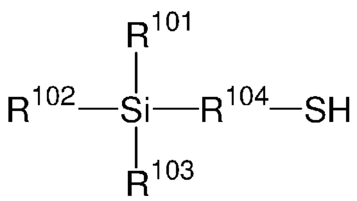

(1)

(wherein, $R^{101}$, $R^{102}$, and $R^{103}$ each independently represents an alkyl having 1 to 12 carbon atoms, alkoxy having 1 to 12 carbon atoms, or a group represented by $-O-(R^{111}-O)_z-R^{112}$ (z pieces of $R^{111}$ each independently represents a divalent hydrocarbon group having 1 to 30 carbon atoms; $R^{112}$ represents an alkyl having 1 to 30 carbon atoms, an alkenyl having 2 to 30 carbon atoms, an aryl having 6 to 30 carbon atoms, or an aralkyl having 7 to 30 carbon atoms; and z represents an integer of 1 to 30); and $R^{104}$ represents an alkylene having 1 to 6 carbon atoms.)

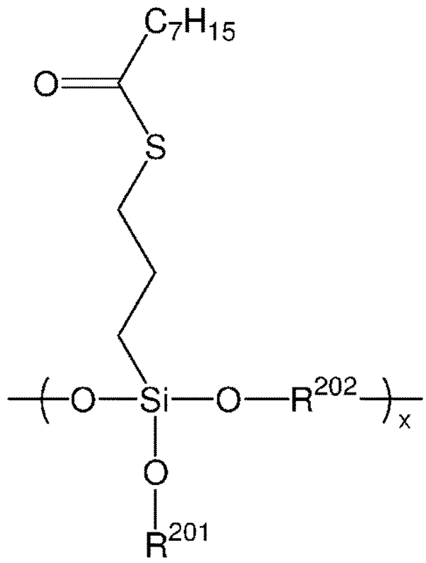

(2)

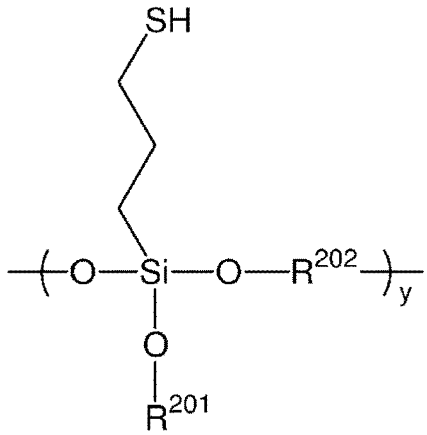

(3)

(wherein, x represents an integer of 0 or more; y represents an integer of 1 or more; $R^{201}$ represents a hydrogen atom, or an alkyl having 1 to 30 carbon atoms, an alkenyl having 2 to 30 carbon atoms or an alkynyl having 2 to 30 carbon atoms optionally substituted with a halogen atom, hydroxyl or carboxyl; and $R^{202}$ represents an alkylene having 1 to 30 carbon atoms, an alkenylene having 2 to 30 carbon atoms, or an alkynylene having 2 to 30 carbon atoms; where $R^{201}$ and $R^{202}$ may together form a ring structure.)

Examples of the compound represented by the formula (1) include, for example, 3-mercaptopropyltrimethoxysilane, 3-mercaptopropyltriethoxysilane, 2-mercaptoethyltrimethoxysilane, 2-mercaptoethyltriethoxysilane, a compound represented by the following chemical formula (4) (Si363 manufactured by Evonik Degussa GmbH), etc., and the compound represented by the following chemical formula (4) can be appropriately used. These silane coupling agents may be used alone, or two or more thereof may be used in combination.

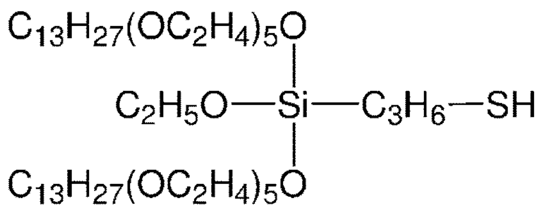

(4)

Examples of the compound comprising the bond unit A represented by the formula (2) and the bond unit B represented by the formula (3) include, for example, those manufactured and sold by Momentive Performance Materials, etc. These compounds may be used alone, or two or more thereof may be used in combination.

A content of the silane coupling agent based on 100 parts by mass of silica is preferably greater than 1.0 part by mass, more preferably greater than 3.0 parts by mass, further preferably greater than 5.0 parts by mass, from the

viewpoint of improvement of dispersibility of silica. Moreover, it is preferably less than 20 parts by mass, more preferably less than 15 parts by mass, further preferably less than 12 parts by mass, from the viewpoints of cost and processability.

<Plasticizing agent>

The rubber composition for tire of the present invention comprises a plasticizing agent comprising at least one of a resin and a liquid rubber. The plasticizing agent may consist of at least one of a resin and a liquid rubber. Moreover, the plasticizing agent preferably has compatibility with a SBR from the viewpoint of the effects of the present invention. Besides, the plasticizing agent is an agent having a rubber-softening action, examples of which include not only the above-described resin and liquid rubber but also those commonly used in the tire industry such as, for example, oil and an ester-based plasticizing agent.

(Resin)

As the above-described resin, resin commonly used in the tire industry can be used. Examples of such a resin include, for example, a styrene-based resin, a coumarone-based resin, a C5-C9-based resin, a terpene-based resin, and the like. Among them, the styrene-based resin and the coumarone-based resin are preferable from the viewpoint of compatibility with a SBR. The resin may be used alone, or two or more thereof may be used in combination.

<<Styrene-based resin>>

Examples of the styrene-based resin include a homopolymer of α-methylstyrene (poly-α-methylstyrene) and a copolymer of α-methylstyrene and another compound including an aromatic compound and a phenolic compound. Examples of such another compound capable of constituting this copolymer include styrene, methylstyrene, methoxystyrene, divinylbenzene, and the like. Examples of the styrene-based resin include, for example, a copolymer of α-methylstyrene and styrene, and the like. As the styrene-based resin, those manufactured by Kraton Corporation, and the like. are appropriately used. The styrene-based resin may be used alone, or two or more thereof may be used in combination.

<<Coumarone-based resin>>

The coumarone-based resin is a resin containing coumarone as a main component, examples of which include, for example, a coumarone resin, a coumarone-indene resin, a copolymer resin containing coumarone, indene, and styrene as main components, and the like. As the coumarone-based resin, those manufactured by NITTO Chemical CO., LTD., and the like are appropriately used. The coumarone-based resin may be used alone, or two or more thereof may be used in combination.

«C5-C9-based resin»

The C5-C9-based petroleum resin means a resin obtained by polymerizing so-called C5 fractions and C9 fractions and may be those undergoing hydrogeneration or modification. The C5 fractions are petroleum fractions equivalent to 4 to 5 carbon atoms and are unsaturated monomers such as isoprene and cyclopentadiene. The C9 fractions are petroleum fractions equivalent to 8 to 10 carbon atoms, such as vinyltoluene, alkylstyrene, and indene. As the C5-C9-based resin, those manufactured by Tosoh Corporation, Zibo Luhua Hongjin New Material Co., Ltd., etc. are appropriately used. The C5-C9-based petroleum resin may be used alone, or two or more thereof may be used in combination.

<<Terpene-based resin>>

Examples of the terpene-based resin include a polyterpene resin, a terpene phenol resin, a terpene styrene resin, and the like. The polyterpene resin is a resin made from at least one type of raw material selected from terpene compounds such as α-pinene, β-pinene, limonene, and dipentene. The terpene phenol resin is a resin made from the above-described terpene compound and a phenol-based compound. The terpene styrene resin is a resin made from the above-described terpene compound and styrene. The polyterpene resin and the terpene styrene resin may be resins undergoing a hydrogeneration process (hydrogenated polyterpene resin, hydrogenated terpene styrene resin). A process of hydrogeneration of the terpene-based resin can be performed in well-known manner. As the terpene-based resin, those manufactured by Kraton Corporation, YASUHARA CHEMICAL CO., LTD., etc. are appropriately used. The terpene-based resin may be used alone, or two or more thereof may be used in combination.

<<Softening point of resin>>

A softening point of the resin is preferably 160°C or lower, more preferably 145°C or lower, further preferably 130°C or lower, from the viewpoint of the effects of the present invention. Moreover, the softening point is preferably 20°C or higher, more preferably 35°C or higher, further preferably 50°C or higher, further preferably 80°C or higher, from the viewpoint of grip performance. Besides, the softening point of the resin is calculated by the above-described measuring method.

(Liquid rubber)

The liquid rubber is not particularly limited as long as it is a polymer that is in a liquid state at room temperature (25°C), examples of which include, for example, a liquid butadiene rubber (liquid BR), a liquid styrene-butadiene rubber (liquid SBR), a liquid isoprene rubber (liquid IR), a liquid styrene-isoprene rubber (liquid SIR), a liquid farnesene rubber, and the like. Among them, the liquid SBR is preferable from the viewpoint of compatibility with a SBR. The liquid rubbers may be used alone, or two or more thereof may be used in combination.

(Other plasticizing agents)

As a plasticizing agent other than the above-described resin and liquid rubber, those commonly used in the tire industry can be used, examples of which include, for example, oil, an ester-based plasticizing agent, and the like.

«Oil»

Examples of oil include, for example, process oils, vegetable oils and fats, animal oils and fats, and the like. Examples of the process oils include paraffinic process oils, naphthenic process oils, aromatic process oils, and the like. Moreover, process oils each having a low polycyclic-aromatic-compound (PCA) content for environmental measures can also be used. Examples of the process oils each having a low PCA content include mild extraction solvates (MES), treated distillate aromatic extracts (TDAE), heavy naphthenic oil; and the like. The oil may be used alone, or two or more thereof may be used in combination.

<<Ester-based plasticizing agent>>

Examples of the ester-based plasticizing agent include, for example, dibutyl adipate (DBA), diisobutyl adipate (DIBA), dioctyl adipate (DOA), di(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. The ester-based plasticizing agents may be used alone, or two or more thereof may be used in combination.

(Content)

A content of the resin based on 100 parts by mass of the rubber component is preferably greater than 1 part by mass, more preferably greater than 5 parts by mass, further preferably greater than 7 parts by mass, further preferably 10 parts by mass or more, from the viewpoint of the effects of the present invention. Moreover, it is preferably less than 50 parts by mass, more preferably less than 30 parts by mass, further preferably less than 20 parts by mass, further preferably less than 15 parts by mass, from the viewpoints of abrasion resistance and grip performance.
A content of the liquid rubber based on 100 parts by mass of the rubber component is preferably greater than 1 part by mass, more preferably greater than 5 parts by mass, further preferably greater than 7 parts by mass, further preferably 10 parts by mass or more, from the viewpoint of the effects of the present invention. Moreover, it is preferably less than 50 parts by mass, more preferably less than 30 parts by mass, further preferably less than 20 parts by mass, further preferably less than 15 parts by mass, from the viewpoints of abrasion resistance and grip performance.
A content of the resin and the liquid rubber when compounded based on 100 parts by mass of the rubber component is preferably greater than 5 parts by mass, more preferably greater than 7 parts by mass, further preferably 10 parts by mass or more, from the viewpoint of the effects of the present invention. Moreover, it is preferably less than 50 parts by mass, more preferably less than 30 parts by mass, further preferably less than 20 parts by mass, further preferably less than 15 parts by mass, from the viewpoints of abrasion resistance and grip performance.
A content of the plasticizing agent based on 100 parts by mass of the rubber component (a total amount of all of a plurality of plasticizing agents when used in combination) is preferably greater than 5 parts by mass, more preferably

greater than 7 parts by mass, further preferably 10 parts by mass or more, from the viewpoint of the effects of the present invention. Moreover, it is preferably less than 70 parts by mass, more preferably less than 50 parts by mass, further preferably less than 40 parts by mass, further preferably less than 30 parts by mass, further preferably less than 20 parts by mass, further preferably less than 15 parts by mass, from the viewpoints of abrasion resistance and grip performance.

<Other compounding agents>

The rubber composition of each layer of the tread according to the present invention can appropriately comprise compounding agents conventionally and generally used in the tire industry, such as, for example, wax, processing aid, an antioxidant, stearic acid, zinc oxide, a vulcanizing agent, and a vulcanization accelerator, in addition to the above-described components.

(Wax)

A content of wax when compounded based on 100 parts by mass of the rubber component is preferably greater than 0.5 parts by mass, more preferably greater than 1 part by mass, from the viewpoint of weather resistance of a rubber. Moreover, it is preferably less than 10 parts by mass, more preferably less than 5 parts by mass, from the viewpoint of prevention of whitening of a tire due to bloom.

(Processing aid)

Examples of processing aid include, for example, a fatty acid metal salt, a fatty acid amide, an amide ester, a silica surfactant, a fatty acid ester, a mixture of a fatty acid metal salt and an amide ester, a mixture of a fatty acid metal salt and a fatty acid amide, and the like. The processing aid may be used alone, or two or more thereof may be used in combination. As processing aid, for example, those commercially available from Schill+Seilacher GmbH, Performance Additives, etc. can be used.

A content of processing aid when compounded based on 100 parts by mass of the rubber component is preferably greater than 0.5 parts by mass, more preferably greater than 1 part by mass, from the viewpoint of exhibiting an effects of improving processability. Moreover, it is preferably less than 10 parts by mass, more preferably less than 8 parts by mass, from the viewpoints of abrasion resistance and breaking strength.

(Antioxidant)

Examples of the antioxidant include, but not particularly limited to, for example, amine-based, quinoline-based, quinone-based, phenol-based, and imidazole-based compounds, and antioxidants such as a carbamic acid metal salt, and as the antioxidants, a phenylenediamine-based antioxidant such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, and N-cyclohexyl-N'-phenyl-p-phenylenediamine; and a quinoline-based antioxidant such as 2,2,4-trimethyl-1,2-dihydroquinoline polymer and 6-ethoxy-2,2,4-trimethyl-1,2-dihydroquinoline are preferable. These antioxidants may be used alone, or two or more thereof may be used in combination.

A content of the antioxidant when compounded based on 100 parts by mass of the rubber component is preferably greater than 0.5 parts by mass, more preferably greater than 1.0 part by mass, further preferably greater than 1.5 parts by mass, from the viewpoint of ozone crack resistance of a rubber. Moreover, it is preferably less than 10.0 parts by mass, more preferably less than 5.0 parts by mass, from the viewpoints of abrasion resistance and wet grip performance.

(Stearic acid)

A content of stearic acid when compounded based on 100 parts by mass of the rubber component is preferably greater than 0.5 parts by mass, more preferably 1.0 part by mass or more, further preferably greater than 1.5 parts by mass, from the viewpoint of processability. Moreover, it is preferably less than 10.0 parts by mass, more preferably less than 5.0 parts by mass, from the viewpoint of vulcanization rate.

(Zinc oxide)

A content of zinc oxide when compounded based on 100 parts by mass of the rubber component is preferably greater than 0.5 parts by mass, more preferably greater than 1.0 part by mass, further preferably greater than 1.5 part

by mass, from the viewpoint of processability. Moreover, it is preferably less than 10.0 parts by mass, more preferably less than 5.0 parts by mass, from the viewpoint of abrasion resistance.

(Vulcanizing agent)

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used.

A content of sulfur when compounded as the vulcanizing agent based on 100 parts by mass of the rubber component is preferably greater than 0.1 parts by mass, more preferably greater than 0.3 part by mass, further preferably greater than 0.5 part by mass, from the viewpoint of securing a sufficient vulcanization reaction. Moreover, it is preferably less than 3.0 parts by mass, more preferably less than 2.5 parts by mass, further preferably less than 2.0 parts by mass, from the viewpoint of prevention of deterioration. Besides, a content of the vulcanizing-agent when an oil-containing sulfur is used as the vulcanizing agent is defined as a total content of pure sulfur contained in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyl dithio)hexan, and the like. As these vulcanizing agents other than sulfur, those commercially available from Taoka Chemical Co., Ltd., LANXESS, Flexsys, etc. can be used.

(Vulcanization accelerator)

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators, etc. These vulcanization accelerators may be used alone, or two or more thereof may be used in combination. Among them, one or more vulcanization accelerators selected from a group consisting of sulfenamide-based, guanidine-based, and thiazole-based vulcanization accelerators are preferable, and the sulfenamide-based vulcanization accelerator is more preferable.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N-dicyclohexyl-2-benzothiazolyl sulfenamide (DCBS), and the like. Among them, N-cyclohexyl-2-benzothiazolyl sulfenamide (CBS) is preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatechol borate, 1,3-di-o-cumenyl guanidine, 1,3-di-o-biphenyl guanidine, 1,3-di-o-cumenyl-2-propionyl guanidine, and the like. Among them, 1,3-diphenylguanidine (DPG) is preferable.

Examples of the thiazole-based vulcanization accelerator include, for example, 2-mercaptobenzothiazole, cyclohexylamine salt of 2-mercaptobenzothiazole, di-2-benzothiazolyl disulfide, and the like. Among them, 2-mercaptobenzothiazole is preferable.

A content of the vulcanization accelerator when compounded based on 100 parts by mass of the rubber component is preferably greater than 1.0 part by mass, more preferably 1.5 parts by mass or more. Moreover, the content of the vulcanization accelerator based on 100 parts by mass of the rubber component is preferably less than 8.0 parts by mass, more preferably less than 6.0 parts by mass, further preferably less than 3.0 parts by mass. When the content of the vulcanization accelerator is within the above-described ranges, breaking strength and elongation tend to be secured.

<Regarding A/B, B/D, and C/E>

In the rubber composition of the present invention, when an amount (% by mass) of the isoprene-based rubber in the rubber component is defined as A, an amount (% by mass) of the styrene-butadiene rubber in the rubber component is defined as B, an amount (part by mass) of the silica based on 100 parts by mass of the rubber component is defined as C, an amount (part by mass) of the resin and the liquid rubber based on 100 parts by mass of the rubber component is defined as D, and an amount (part by mass) of the plasticizing agent based on 100 parts by mass of the rubber component is defined as E, the A, B, C, D, and E satisfy the following inequalities (1), (2), and (3).

$$A / B > 3.0 \quad (1)$$

$$B / D < 3.0 \quad (2)$$

$$C / E > 4.0 \quad (3)$$

(Inequality (1))

A value of the right side in the inequality (1) is preferably 3.5, more preferably 4.0. An upper limit of a value of A/B is not particularly limited and, for example, it is less than about 15.0, preferably less than 10.0, more preferably less than 8.0, further preferably less than 6.0.

(Inequality (2))

A value of the right side in the inequality (2) is preferably 2.9, more preferably 2.8, more preferably 2.6, further preferably 2.4, further preferably 2.2, further preferably 2.1. A lower limit of a value of B/D is not particularly limited and, for example, it is greater than about 0.5, preferably greater than 0.7, more preferably greater than 0.9, further preferably greater than 1.0.

(Inequality (3))

A value of the right side inf the inequality (3) is preferably 4.5, more preferably 5.0, further preferably 5.4. An upper limit of a value of C/E is not particularly limited and, for example, it is less than about 20.0, preferably less than 15.0, more preferably less than 10.0, further preferably less than 8.0.

[Tire]

A tire of the present invention is a tire comprising a tread that consists of a first layer whose outer surface constitutes a tread surface and a second layer located on the inner side of the first layer in a tire radial direction, or having a tread that further comprises one or two intermediate layers between the first layer and the second layer, the first layer being composed of the above-described rubber composition of the present invention. Here, as shown in FIG. 1, the second layer is located on the outer side of a belt layer 6 in the tire radial direction and is adjacent to the belt layer 6.

<Inequality (4)>

In the tire of the present invention, when a land ratio (%) of the tread surface is defined as F, the C, E, and F preferably satisfy the following inequality (4).

$$(C / E) \times F < 10000 \quad (4)$$

A value of the right side in the inequality (4) is preferably 5000, more preferably 1000, further preferably 900, further preferably 800, further preferably 700, further preferably 600. On the other hand, a lower limit of a value of (C/E) $\times$ F is not particularly limited and, for example, it is not less than 100, preferably greater than 100, more preferably greater than 200, further preferably greater than 300.

<Inequality (5)>

In the tire of the present invention, when a thickness (mm) of the tread is defined as G, the A, B, and G preferably satisfy the following inequality (5).

$$(A / B) / G < 1.00 \quad (5)$$

A value of the right side in the inequality (5) is preferably 0.80, more preferably 0.60, more preferably 0.50, further preferably 0.40, further preferably 0.35. A lower limit of a value of (A/B)/G is not particularly limited and, for example, it is greater than 0,08, preferably greater than 0.09, more preferably greater than 0.10, further preferably greater than 0.11, further preferably greater than 0.12.

(Land ratio)

In the tire of the present invention, the land ratio (%) F is preferably greater than 60%, more preferably greater than 70%, further preferably greater than 80%, further preferably greater than 85%. Moreover, this F is preferably less than 93%, more preferably less than 91%.

<Thickness of tread>

The thickness of the tread of the tire of the present invention will be described. For example, in the case where the tire of the present invention comprises a tread consisting of a first layer and a second layer, a thickness of the first layer is preferably greater than 16 mm, more preferably greater than 18 mm, further preferably greater than 20 mm. On the other hand, the thickness of the first layer is preferably less than 28 mm, more preferably less than 26 mm, further preferably less than 24 mm. Moreover, a thickness of the second layer is preferably greater than 0.5 mm, more preferably greater than 1.0 mm, further preferably greater than 1.5 mm. On the other hand, the thickness of the second layer is preferably less than 3.5 mm, more preferably less than 3.0 mm, further preferably less than 2.5 mm.

In the case where the tire of the present invention comprises a tread consisting of a first layer, an intermediate layer, and a second layer, a thickness of the first layer is preferably greater than 8 mm, more preferably greater than 9 mm, further preferably greater than 10 mm. On the other hand, the thickness of the first layer is preferably less than 14 mm, more preferably less than 13 mm, further preferably less than 12 mm. Moreover, a thickness of the intermediate layer is preferably greater than 8 mm, more preferably greater than 9 mm, further preferably greater than 10 mm. On the other hand, the thickness of the intermediate layer is preferably less than 14 mm, more preferably less than 13 mm, further preferably less than 12 mm. Furthermore, a thickness of the second layer is preferably greater than 0.5 mm, more preferably greater than 1.0 mm, further preferably greater than 1.5 mm. On the other hand, the thickness of the second layer is preferably less than 3.5 mm, more preferably less than 3.0 mm, further preferably less than 2.5 mm.

In the case where the tire of the present invention comprises a tread consisting of a first layer, two intermediate layers, and a second layer, the first layer and the second layer can be made to have the same thicknesses as those in the case in which the number of the intermediate layers is one. On the other hand, the two intermediate layers may be ones obtained by dichotomizing the above-described one intermediate layer in a desired ratio. For example, the two intermediate layers may be ones obtained by dividing the above-described one intermediate layer into layers whose thicknesses are equal to each other, ones obtained by dividing the above-described one intermediate layer into two layers which have a thickness ratio of 2 to 1 from the tread surface side, or ones obtained by dividing the above-described one intermediate layer into two layers which have a thickness ratio of 1 to 2.

The thickness (mm) G of the tread of the tire of the present invention means a thickness of the entire tread. For example, the thickness G corresponds to H in FIG. 1. The G is preferably greater than 16.5 mm, more preferably greater than 18 mm, further preferably greater than 20 mm, further preferably greater than 22 mm. On the other hand, the thickness of the first layer is preferably less than 31.5 mm, more preferably less than 30.0 mm, further preferably less than 28 mm, further preferably less than 26 mm.

[Intended use]

The tire according to the present invention is a tire comprising a tread that consists of two, three, or four rubber layers, and can be appropriately used as a pneumatic tire although the tire may be a pneumatic tire or a non-pneumatic tire. Moreover, the tire of the present invention can be used for multiple applications, such as a tire for a passenger car, a heavy-duty tire such as for a truck/bus, a tire for a two-wheeled vehicle, and a high-performance tire, and particularly, the tire of the present invention is appropriately used as a heavy-duty tire. The heavy-duty tire is a tire not only for large trucks and buses but also for small trucks, buses, vans, and the like, and the heavy-duty tire is a tire having a maximum load capacity greater than 1000 kg. In a case where the heavy-duty tire is used as a tire for large vehicles, the heavy-duty tire is preferably a tire having a maximum load capacity of 1400 kg or more. Moreover, in a case where the heavy-duty tire is used as a tire for small vehicles, a cord of a belt reinforcement layer and/or a carcass is preferably a textile cord.

[Production method]

<Production of rubber composition>

The rubber composition of the present invention can be produced by a known method. For example, it can be produced by kneading the above-described components with a rubber kneading machine such as an open roll or a sealed type kneader (a Banbury mixer, a kneader, and the like). A kneading step includes, for example, a base kneading step of kneading compounding agents and additives other than a vulcanizing agent and a vulcanization accelerator; and

a final kneading (F-kneading) step of adding the vulcanizing agent and the vulcanization accelerator to the kneaded product obtained in the base kneading step and kneading them. Additionally, the base kneading step can also be divided into multiple steps as necessary. Examples of a kneading condition include, but not particularly limited to, for example, a method of kneading at a discharge temperature of 150°C to 170°C for 3 to 10 minutes in the base kneading step and kneading at 50°C to 110°C for 1 to 5 minutes in the final kneading step.

<Production of tire>

A rubber composition obtained by compounding the above-described components is extruded into a shape of each of desired layers of a tread with the rubber composition remaining unvulcanized, and is molded together with other tire members on a tire forming machine in a usual method, so that an unvulcanized tire can be produced. A tire of the present invention can be obtained by heating and pressurizing (vulcanizing) this unvulcanized tire in a vulcanizing machine. Examples of a vulcanization condition include, but not particularly limited to, for example, a method of vulcanizing at 150 to 200°C for 5 to 30 minutes.

EXAMPLES

Hereinafter, the present invention will be described based on Examples, though the present disclosure is not limited to only these Examples.

Various chemicals used in Examples and Comparative examples are collectively shown below.

NR: TSR20
SBR: SBR1502 manufactured by ARLANXEO. (E-SBR, styrene content: 23.5% by mass, vinyl content: 18 mol%, Mw: 420,000)
BR: BUNA CB24 manufactured by ARLANXEO. (BR synthesized using a Nd-based catalyst, cis content: 96 mol%, vinyl content: 0.7 mol%, Mw: 500,000)
Carbon black: N220 manufactured by BIRLA CARBON BRASIL LTDA. ($N_2SA$: 115 $m^2/g$)
Silica: Ultrasil 9100GR manufactured by Evonik Degussa GmbH ($N_2SA$: 230 $m^2/g$, average primary particle size: 15 nm)
Silane coupling agent: Si266 manufactured by Evonik Degussa GmbH (bis(3-triethoxysilylpropyl)disulfide)
Oil: Diana process oil PA32 manufactured by Idemitsu Kosan Co., Ltd.
Resin 1: Sylvares SA85 manufactured by Kraton Corporation (styrene-based resin obtained by copolymerizing $\alpha$-methylstyrene and styrene, softening point: 85°C)
Resin 2: Coumarone V-120 manufactured by NITTO Chemical CO., LTD. (coumarone-based resin obtained by copolymerizing coumarone and indene, softening point: 120°C)
Resin 3: PETROTACK 100V manufactured by Tosoh Corporation (C5-C9-based petroleum resin, softening point: 96°C)
Resin 4: SYLVATARAXX 4150 manufactured by Kraton Corporation (terpene-based resin (polyterpene resin) obtained by copolymerizing terpene compounds, softening point: 115°C)
Resin 5: YS Polyster T115 manufactured by YASUHARA CHEMICAL CO., LTD. (terpene-based resin (terpene phenol resin) obtained by copolymerizing terpene compound and phenol (having one hydroxyl group), softening point: 110°C to 120°C)
Liquid rubber: RICON 100 manufactured by Cray Valley (liquid SBR, random copolymer, styrene content: 25% by mass, vinyl content: 70%, Mn: 4500)
Antioxidant 1: Nocrac 6C manufactured by Ouchi Shinko Chemical Industry Co., Ltd. (N-(1,3-dimethylbutyl)-N'-phenyl-p-phenylenediamine)
Antioxidant 2: Nocrac RD manufactured by Ouchi Shinko Chemical Industry Co., Ltd. (poly(2,2,4-trimethyl-1,2-dihydroquinoline))
Wax: Sunnoc N manufactured by Ouchi Shinko Chemical Industry Co., Ltd.
Stearic acid: Bead stearic acid "CAMELLIA" manufactured by NOF CORPORATION
Zinc oxide: Zinc oxide No. 2 manufactured by Mitsui Mining & Smelting Co., Ltd.
Sulfur: HK-200-5 manufactured by Hosoi Chemical Industry Co., Ltd. (5% oil-containing powdered sulfur)
Vulcanization accelerator 1: Nocceler NS-P manufactured by Ouchi Shinko Chemical Industry Co., Ltd. (N-tert-butyl-2-benzothiazolylsulfenamide)
Vulcanization accelerator 2: Nocceler D manufactured by Ouchi Shinko Chemical Industry Co., Ltd. (1,3-diphenylguanidine (DPG))

[Example and Comparative example]

According to the compounding formulations shown in Table 1, using a 1.7 L closed Banbury mixer, all chemicals other than sulfur and a vulcanization accelerator were kneaded for 1 to 10 minutes until a discharge temperature reached 150°C to 160°C, to obtain a kneaded product. Next, using a twinscrew open roll, the sulfur and vulcanization accelerator were added to the obtained kneaded product, and the mixture was kneaded for 4 minutes until the temperature reached 105°C, to obtain an unvulcanized rubber composition.

According to Table 2, the obtained unvulcanized rubber composition was molded into shapes of a first layer, an intermediate layer, and a second layer of a tread and attached together with other tire members to produce an unvulcanized tire, and the unvulcanized tire was vulcanized at 170°C, thereby obtaining each test tire (size: 12R22.5, tire for truck/bus).

< Abrasion resistance>

Each test tire obtained above was rim-assembled to a rim (22.5 × 7.50), and the internal pressure was adjusted to 900 kPa. This tire was mounted on a drive wheel of a test vehicle (2-D4 truck). This test vehicle (loading capacity: 8 tons) was loaded with cargo of 3450 kg per tire and was made to run on a general road and an expressway in Japan, and abrasion resistance is evaluated. An abrasion loss is measured at a point when a running distance reaches 45,000 km (which corresponds to an abrasion rate of 30%). An inverse value of the abrasion loss was indicated as an index with the reference example (Comparative example 2) being as 100. A greater numerical value means less abrasion loss and better abrasion resistance.

Table 1

| | a1 | a2 | a3 | a4 | a5 | a6 | a7 | a8 |
|---|---|---|---|---|---|---|---|---|
| Compounding amount (part by mass) | | | | | | | | |
| NR | 80 | 80 | 80 | 80 | 80 | 80 | 85 | 80 |
| SBR | 20 | 20 | 20 | 20 | 20 | 20 | 15 | 20 |
| BR | - | - | - | - | - | - | - | - |
| Carbon black | 5 | 5 | 5 | 5 | 5 | 5 | 5 | 5 |
| Silica | 55 | 55 | 55 | 55 | 55 | 55 | 55 | 75 |
| Silane coupling agen t | 7.7 | 7.7 | 7.7 | 7.7 | 7.7 | 7.7 | 7.7 | 10.5 |
| Oil | - | - | - | - | - | - | - | - |
| Resin 1 | 10 | - | - | - | - | - | - | - |
| Resin 2 | - | 10 | - | - | - | - | - | - |
| Resin 3 | - | - | 10 | - | - | - | - | - |
| Resin 4 | - | - | - | 10 | - | - | - | - |
| Resin 5 | - | - | - | - | 10 | - | - | - |
| Liquid rubber | - | - | - | - | - | 10 | 6 | 18 |
| Antioxidant 1 | 1.5 | 1.5 | 1.5 | 1.5 | 1.5 | 1.5 | 1.5 | 1.5 |
| Antioxidant 2 | 1.0 | 1.0 | 1.0 | 1.0 | 1.0 | 1.0 | 1.0 | 1.0 |
| Wax | 1.5 | 1.5 | 1.5 | 1.5 | 1.5 | 1.5 | 1.5 | 1.5 |
| Stearic acid | 3.0 | 3.0 | 3.0 | 3.0 | 3.0 | 3.0 | 3.0 | 3.0 |
| Zinc oxide | 3.0 | 3.0 | 3.0 | 3.0 | 3.0 | 3.0 | 3.0 | 3.0 |
| Sulfur | 1.5 | 1.5 | 1.5 | 1.5 | 1.5 | 1.5 | 1.5 | 1.5 |
| Vulcanization accelerator 1 | 1.5 | 1.5 | 1.5 | 1.5 | 1.5 | 1.5 | 1.5 | 1.5 |
| Vulcanization accelerator 2 | 0.55 | 0.55 | 0.55 | 0.55 | 0.55 | 0.55 | 0.55 | 0.75 |
| | b1 | b2 | b3 | b4 | b5 | c | d | |
| Compounding amount (part by mass) | | | | | | | | |
| NR | 80 | 80 | 100 | 80 | 80 | 70 | 100 | |
| SBR | 20 | 20 | - | 20 | 20 | - | - | |
| BR | - | - | - | - | - | 30 | - | |

(continued)

| | b1 | b2 | b3 | b4 | b5 | c | d |
|---|---|---|---|---|---|---|---|
| Compounding amount (part by mass) | | | | | | | |
| Carbon black | 5 | 5 | 5 | 5 | 5 | 40 | 35 |
| Silica | 55 | 55 | 55 | 55 | 55 | - | 5 |
| Silane coupling agent | 7.7 | 7.7 | 7.7 | 7.7 | 7.7 | - | - |
| Oil | - | 10 | - | - | - | 8 | - |
| Resin 1 | - | - | 10 | 5 | 20 | - | - |
| Resin 2 | - | - | - | - | - | - | - |
| Resin 3 | - | - | - | - | - | - | - |
| Resin 4 | - | - | - | - | - | - | - |
| Resin 5 | - | - | - | - | - | - | - |
| Liquid rubber | - | - | - | - | - | - | - |
| Antioxidant 1 | 1.5 | 1.5 | 1.5 | 1.5 | 1.5 | 2.0 | 1.5 |
| Antioxidant 2 | 1.0 | 1.0 | 1.0 | 1.0 | 1.0 | 1.0 | - |
| Wax | 1.5 | 1.5 | 1.5 | 1.5 | 1.5 | 2.0 | - |
| Stearic acid | 3.0 | 3.0 | 3.0 | 3.0 | 3.0 | 2.0 | 2.0 |
| Zinc oxide | 3.0 | 3.0 | 3.0 | 3.0 | 3.0 | 2.0 | 3.5 |
| Sulfur | 1.5 | 1.5 | 1.5 | 1.5 | 1.5 | 1.5 | 2.5 |
| Vulcanization accelerator 1 | 1.5 | 1.5 | 1.5 | 1.5 | 1.5 | 1.5 | 1.5 |
| Vulcanization accelerator 2 | 0.55 | 0.55 | 0.55 | 0.55 | 0.55 | - | - |

Table 2

| | Example | | | | | |
|---|---|---|---|---|---|---|
| | 1 | 2 | 3 | 4 | 5 | 6 |
| Tread | | | | | | |
| First layer | a1 | a2 | a3 | a4 | a5 | a6 |
| Land ratio (%) (F) | 80 | 80 | 80 | 80 | 80 | 80 |
| Thickness (mm) ($G_1$) | 11 | 11 | 11 | 11 | 11 | 11 |
| Intermediate layer | c | c | c | c | c | c |
| Thickness (mm) ($G_m$) | 11 | 11 | 11 | 11 | 11 | 11 |
| Second layer | d | d | d | d | d | d |
| Thickness (mm) ($G_2$) | 2 | 2 | 2 | 2 | 2 | 2 |
| First layer | | | | | | |
| A (IR-based rubber) (% by mass) | 80 | 80 | 80 | 80 | 80 | 80 |
| B (SBR) (% by mass) | 20 | 20 | 20 | 20 | 20 | 20 |
| C (silica) (part by mass) | 55 | 55 | 55 | 55 | 55 | 55 |
| D (resin / liquid rubber) (part by mass) | 10 | 10 | 10 | 10 | 10 | 10 |
| E (plasticizing agent) (part by mass) | 10 | 10 | 10 | 10 | 10 | 10 |
| F (land ratio) (%) | 80 | 80 | 80 | 80 | 80 | 80 |
| Tread | | | | | | |
| G (tread thickness) (mm) | 24 | 24 | 24 | 24 | 24 | 24 |
| Inequality (1) A/B | 4.0 | 4.0 | 4.0 | 4.0 | 4.0 | 4.0 |
| Inequality (2) B/ D | 2.0 | 2.0 | 2.0 | 2.0 | 2.0 | 2.0 |
| Inequality (3) C/E | 5.5 | 5.5 | 5.5 | 5.5 | 5.5 | 5.5 |
| Inequality (4) (C/E) × F | 440 | 440 | 440 | 440 | 440 | 440 |

(continued)

| | Example | | | | | |
|---|---|---|---|---|---|---|
| | 1 | 2 | 3 | 4 | 5 | 6 |
| Inequality (5) (A/B)/G | 0.17 | 0.17 | 0.17 | 0.17 | 0.17 | 0.17 |
| Abrasion resistance index | 119 | 114 | 124 | 105 | 105 | 124 |

- continued -

| | Example | | | | | |
|---|---|---|---|---|---|---|
| | 7 | 8 | 9 | 10 | 11 | 12 |
| Tread | | | | | | |
| First layer | a7 | a7 | a7 | a8 | a8 | a8 |
| Land ratio (%) (F) | 80 | 90 | 80 | 80 | 60 | 80 |
| Thickness (mm) ($G_1$) | 11 | 11 | 8.5 | 11 | 11 | 14 |
| Intermediate layer | c | c | c | c | c | c |
| Thickness (mm) ($G_m$) | 11 | 11 | 8 | 11 | 11 | 13.5 |
| Second layer | d | d | d | d | d | d |
| Thickness (mm) ($G_2$) | 2 | 2 | 1.5 | 2 | 2 | 2.5 |
| First layer | | | | | | |
| A (IR-based rubber) (% by mass) | 85 | 85 | 85 | 80 | 80 | 80 |
| B (SBR) (% by mass) | 15 | 15 | 15 | 20 | 20 | 20 |
| C (silica) (part by mass) | 55 | 55 | 55 | 75 | 75 | 75 |
| D (resin / liquid rubber) (part by mass) | 6 | 6 | 6 | 18 | 18 | 18 |
| E (plasticizing agent) (part by mass) | 6 | 6 | 6 | 18 | 18 | 18 |
| F (land ratio) (%) | 80 | 90 | 80 | 80 | 60 | 80 |
| Tread | | | | | | |
| G (tread thickness) (mm) | 24 | 24 | 18 | 24 | 24 | 30 |
| Inequality (1) A/B | 5.7 | 5.7 | 5.7 | 4.0 | 4.0 | 4.0 |
| Inequality (2) B/ D | 2.5 | 2.5 | 2.5 | 1.1 | 1.1 | 1.1 |
| Inequality (3) C/E | 9.2 | 9.2 | 9.2 | 4.2 | 4.2 | 4.2 |
| Inequality (4) (C/E) × F | 733 | 825 | 733 | 333 | 250 | 333 |
| Inequality (5) (A/B)/G | 0.24 | 0.24 | 0.31 | 0.17 | 0.17 | 0.13 |
| Abrasion resistance index | 118 | 126 | 110 | 129 | 114 | 137 |

- continued -

| | Comparative example | | | | |
|---|---|---|---|---|---|
| | 1 | 2 | 3 | 4 | 5 |
| Tread | | | | | |
| First layer | b1 | b2 | b3 | b4 | b5 |
| Land ratio (%) (F) | 80 | 80 | 80 | 80 | 80 |
| Thickness (mm) ($G_1$) | 11 | 11 | 11 | 11 | 11 |
| Intermediate layer | c | c | c | c | c |
| Thickness (mm) ($G_m$) | 11 | 11 | 11 | 11 | 11 |
| Second layer | d | d | d | d | d |
| Thickness (mm) ($G_2$) | 2 | 2 | 2 | 2 | 2 |

(continued)

| | Comparative example | | | | |
|---|---|---|---|---|---|
| | 1 | 2 | 3 | 4 | 5 |
| First layer | | | | | |
| A (IR-based rubber) (% by mass) | 80 | 80 | 100 | 80 | 80 |
| B (SBR) (% by mass) | 20 | 20 | 0 | 20 | 20 |
| C (silica) (part by mass) | 55 | 55 | 55 | 55 | 55 |
| D (resin / liquid rubber) (part by mass) | 0 | 0 | 10 | 5 | 20 |
| E (plasticizing agent) (part by mass) | 0 | 10 | 10 | 5 | 20 |
| F (land ratio) (%) | 80 | 80 | 80 | 80 | 80 |
| Tread | | | | | |
| G (tread thickness) (mm) | 24 | 24 | 24 | 24 | 24 |
| Inequality (1) A/B | 4.0 | 4.0 | - | 4.0 | 4.0 |
| Inequality (2) B/D | - | - | 0.0 | 4.0 | 1.0 |
| Inequality (3) C/E | - | 5.5 | 5.5 | 11.0 | 2.8 |
| Inequality (4) (C/E) × F | - | 440 | 440 | 880 | 220 |
| Inequality (5) (A/B)/G | 0.17 | 0.17 | - | 0.17 | 0.17 |
| Abrasion resistance index | 95 | 100 | 90 | 100 | 100 |

From the results shown in FIG. 2, it can be found that, in the tires of the present invention, early abrasion is suppressed and abrasion resistance is improved under the condition that a large force is applied for a long time.

<Embodiments>

Preferred embodiments of the present invention are described below.

[1] A rubber composition for tire comprising

a rubber component that comprises an isoprene-based rubber and a styrene-butadiene rubber,
silica whose content based on 100 parts by mass of the rubber component is greater than 50 parts by mass, and
a plasticizing agent that comprises at least one of a resin and a liquid rubber,

wherein, when an amount (% by mass) of the isoprene-based rubber in the rubber component is defined as A, an amount (% by mass) of the styrene-butadiene rubber in the rubber component is defined as B, an amount (part by mass) of the silica based on 100 parts by mass of the rubber component is defined as C, an amount (part by mass) of the resin and the liquid rubber based on 100 parts by mass of the rubber component is defined as D, and an amount (part by mass) of the plasticizing agent based on 100 parts by mass of the rubber component is defined as E, the A, B, C, D, and E satisfy the following inequalities (1), (2), and (3), and wherein the right side of the inequality (1) is preferably 3.5, more preferably 4.0, the right side of the inequality (2) is preferably 2.9, more preferably 2.8, further preferably 2.6, further preferably 2.4, further preferably 2.2, further preferably 2.1, and the right side of the inequality (3) is preferably 4.5:

$$A / B > 3.0 \quad (1)$$

$$B / D < 3.0 \quad (2)$$

$$C / E > 4.0 \quad (3)$$

[2] The rubber composition for tire of [1] above, wherein the resin is at least one selected from a group consisting of a styrene-based resin and a coumarone-based resin, and wherein the liquid rubber is preferably a liquid styrene-butadiene rubber.
[3] The rubber composition for tire of [1] or [2] above, wherein the right side of the inequality (3) is 5.0.
[4] The rubber composition for tire of any one of [1] to [3] above, wherein the D is 5 or more, preferably greater than 5, more preferably greater than 7.
[5] The rubber composition for tire of any one of [1] to [3] above, wherein the D is 10 or more.
[6] The rubber composition for tire of any one of [1] to [5] above, wherein the C is 55 or more, preferably greater than 60, more preferably greater than 65, further preferably greater than 70.
[7] The rubber composition for tire of any one of [1] to [6] above, wherein the A is greater than 50, preferably greater than 60, more preferably 70 or more, further preferably greater than 70.
[8] The rubber composition for tire of any one of [1] to [7] above, wherein an average primary particle size of the silica is less than 30 nm, preferably less than 25 nm, more preferably less than 20 nm, further preferably less than 19 nm, further preferably less than 18 nm, further preferably less than 17 nm, further preferably less than 16 nm, further preferably 15 nm or less.
[9] A tire comprising

a tread that consists of a first layer whose outer surface constitutes a tread surface and a second layer located on the inner side of the first layer in a tire radial direction, or
a tread that further comprises one or two intermediate layers between the first layer and the second layer, wherein the first layer is composed of a rubber composition of any one of [1] to [8] above.

[10] The tire of [9] above, wherein, when a land ratio (%) of the tread surface is defined as F, the C, E, and F satisfy the following inequality (4), and wherein the right side of the inequality (4) is preferably 5000, more preferably 1000, further preferably 900, further preferably 800, further preferably 700, further preferably 600:

$$(C / E) \times F < 10000 \qquad (4)$$

[11] The tire of [9] or [10] above, wherein, when a thickness (mm) of the tread is defined as G, the A, B, and G satisfy the following inequality (5), and wherein the right side of the inequality (5) is preferably 0.80, more preferably 0.60, further preferably 0.50, further preferably 0.40, further preferably 0.35, further preferably 0.30, further preferably 0.25, further preferably 0.20:

$$(A / B) / G < 1.00 \qquad (5)$$

[12] The tire of any one of [9] to [11] above, wherein the tire is a heavy-duty tire.

REFERENCE SIGNS LIST

| | |
|---|---|
| 1 | Tire |
| 2 | Tread surface |
| 3 | Tread |
| 4 | First layer |
| 5 | Second layer |
| 6 | Breaker |
| H | Thickness of tread |
| H1 | Thickness of first layer of tread |
| H2 | Thickness of second layer of tread |
| C | Tire center line |

## Claims

**1.** A rubber composition for tire comprising

a rubber component that comprises an isoprene-based rubber and a styrene-butadiene rubber,

silica whose content based on 100 parts by mass of the rubber component is greater than 50 parts by mass, and
a plasticizing agent that comprises at least one of a resin and a liquid rubber,

wherein, when an amount (% by mass) of the isoprene-based rubber in the rubber component is defined as A, an amount (% by mass) of the styrene-butadiene rubber in the rubber component is defined as B, an amount (part by mass) of the silica based on 100 parts by mass of the rubber component is defined as C, an amount (part by mass) of the resin and the liquid rubber based on 100 parts by mass of the rubber component is defined as D, and an amount (part by mass) of the plasticizing agent based on 100 parts by mass of the rubber component is defined as E, the A, B, C, D, and E satisfy the following inequalities (1), (2), and (3):

$$A / B > 3.0 \quad (1)$$

$$B / D < 3.0 \quad (2)$$

$$C / E > 4.0 \quad (3)$$

**2.** The rubber composition for tire of claim 1, wherein the resin is at least one selected from a group consisting of a styrene-based resin and a coumarone-based resin, and wherein the liquid rubber is preferably a liquid styrene-butadiene rubber.

**3.** The rubber composition for tire of claim 1 or 2, wherein the right side of the inequality (3) is 5.0.

**4.** The rubber composition for tire of any one of claims 1 to 3, wherein the D is 5 or more.

**5.** The rubber composition for tire of any one of claims 1 to 3, wherein the D is 10 or more.

**6.** The rubber composition for tire of any one of claims 1 to 5, wherein the C is 55 or more.

**7.** The rubber composition for tire of any one of claims 1 to 6, wherein the A is greater than 50.

**8.** The rubber composition for tire of any one of claims 1 to 7, wherein an average primary particle size of the silica is less than 30 nm.

**9.** A tire comprising

a tread that consists of a first layer whose outer surface constitutes a tread surface and a second layer located on an inner side of the first layer in a tire radial direction, or
a tread that further comprises one or two intermediate layers between the first layer and the second layer,
wherein the first layer is composed of a rubber composition of any one of claims 1 to 8.

**10.** The tire of claim 9, wherein, when a land ratio (%) of the tread surface is defined as F, the C, E, and F satisfy the following inequality (4) described below:

$$(C / E) \times F < 10000 \quad (4)$$

**11.** The tire of claim 9 or 10, wherein, when a thickness (mm) of the tread is defined as G, the A, B, and G satisfy the following inequality (5):

$$(A / B) / G < 1.00 \quad (5)$$

**12.** The tire of any one of claims 9 to 11, wherein the tire is a heavy-duty tire.

## Patentansprüche

1. Kautschukzusammensetzung für Reifen, umfassend

   eine Kautschukkomponente, die einen Isopren-basierten Kautschuk und einen Styrol-Butadien-Kautschuk umfasst,
   Siliziumdioxid, dessen Gehalt bezogen auf 100 Massenteile der Kautschukkomponente größer als 50 Massenteile ist, und
   einen Weichmacher, der mindestens eines von einem Harz und einem flüssigen Kautschuk umfasst,
   wobei, wenn eine Menge (Massen-%) des Isopren-basierten Kautschuks in der Kautschukkomponente als A definiert ist, eine Menge (Massen-%) des Styrol-Butadien-Kautschuks in der Kautschukkomponente als B definiert ist, eine Menge (Massenteile) des Siliziumdioxids bezogen auf 100 Massenteile der Kautschukkomponente als C definiert ist, eine Menge (Massenteile) des Harzes und des flüssigen Kautschuks bezogen auf 100 Massenteile der Kautschukkomponente als D definiert ist, und eine Menge (Massenteile) des Weichmachers bezogen auf 100 Massenteile der Kautschukkomponente als E definiert ist, A, B, C, D und E den folgenden Ungleichungen (1), (2) und (3) genügen:

$$A / B > 3{,}0 \quad (1)$$

$$B / D < 3{,}0 \quad (2)$$

$$C / E > 4{,}0 \quad (3)$$

2. Kautschukzusammensetzung für Reifen nach Anspruch 1, wobei das Harz mindestens eines ist, welches ausgewählt ist aus einer Gruppe bestehend aus einem Styrol-basierten Harz und einem Cumaron-basierten Harz, und wobei der flüssige Kautschuk bevorzugt ein flüssiger Styrol-Butadien-Kautschuk ist.

3. Kautschukzusammensetzung für Reifen nach Anspruch 1 oder 2, wobei die rechte Seite der Ungleichung (3) 5,0 beträgt.

4. Kautschukzusammensetzung für Reifen nach einem der Ansprüche 1 bis 3, wobei D 5 oder mehr beträgt.

5. Kautschukzusammensetzung für Reifen nach einem der Ansprüche 1 bis 3, wobei D 10 oder mehr beträgt.

6. Kautschukzusammensetzung für Reifen nach einem der Ansprüche 1 bis 5, wobei C 55 oder mehr beträgt.

7. Kautschukzusammensetzung für Reifen nach einem der Ansprüche 1 bis 6, wobei A größer als 50 ist.

8. Kautschukzusammensetzung für Reifen nach einem der Ansprüche 1 bis 7, wobei eine mittlere Primärpartikelgröße des Siliziumdioxids weniger als 30 nm beträgt.

9. Reifen, umfassend

   einen Laufstreifen, der aus einer ersten Schicht, deren äußere Oberfläche eine Laufstreifenoberfläche bildet, und einer zweiten Schicht, die sich auf einer inneren Seite der ersten Schicht in einer Reifenradialrichtung befindet, besteht, oder
   einen Laufstreifen, der zudem eine oder zwei Zwischenschichten zwischen der ersten Schicht und der zweiten Schicht umfasst,
   wobei die erste Schicht mit einer Kautschukzusammensetzung nach einem der Ansprüche 1 bis 8 aufgebaut ist.

10. Reifen nach Anspruch 9, wobei, wenn ein Positivprofilanteil (%) der Laufstreifenoberfläche als F definiert ist, C, E und F der folgenden Ungleichung (4) genügen, die nachstehend beschrieben ist:

$$(C / E) \times F < 10000 \qquad (4)$$

**11.** Reifen nach Anspruch 9 oder 10, wobei, wenn eine Dicke (mm) des Laufstreifens als G definiert ist, A, B und G der folgenden Ungleichung (5) genügen:

$$(A / B) / G < 1,00 \qquad (5)$$

**12.** Reifen nach einem der Ansprüche 9 bis 11, wobei der Reifen ein Schwerlastreifen ist.

## Revendications

**1.** Composition de caoutchouc pour pneumatique, comprenant

un composant de caoutchouc qui comprend un caoutchouc à base d'isoprène et un caoutchouc styrène butadiène,
une silice dont la teneur sur la base de 100 parts en masse du composant de caoutchouc est supérieure à 50 parts en masse, et
un agent plastifiant qui comprend au moins un élément parmi une résine et un caoutchouc liquide,
dans laquelle, quand une quantité (% en masse) du caoutchouc à base d'isoprène dans le composant de caoutchouc est définie comme A, une quantité (% en masse) du caoutchouc styrène butadiène dans le composant de caoutchouc est définie comme B, une quantité (part en masse) de la silice sur la base de 100 parts en masse du composant de caoutchouc est définie comme C, une quantité (part en masse) de la résine et du caoutchouc liquide sur la base de 100 parts en masse du composant de caoutchouc est définie comme D, et une quantité (part en masse) de l'agent plastifiant sur la base de 100 parts en masse du composant de caoutchouc est définie comme E, les valeurs A, B, C, D et E satisfont aux inégalités (1), (2) et (3) suivantes :

$$A / B > 3,0 \qquad (1)$$

$$B / D < 3,0 \qquad (2)$$

$$C / E > 4,0 \qquad (3).$$

**2.** Composition de caoutchouc pour pneumatique selon la revendication 1, dans laquelle la résine est au moins une résine sélectionnée parmi un groupe constitué d'une résine à base de styrène et d'une résine à base de coumarone, et dans laquelle le caoutchouc liquide est de préférence un caoutchouc styrène butadiène liquide.

**3.** Composition de caoutchouc pour pneumatique selon la revendication 1 ou 2, dans laquelle le côté droit de l'inégalité (3) est 5,0.

**4.** Composition de caoutchouc pour pneumatique selon l'une quelconque des revendications 1 à 3, dans laquelle la valeur D est 5 ou plus.

**5.** Composition de caoutchouc pour pneumatique selon l'une quelconque des revendications 1 à 3, dans laquelle la valeur D est 10 ou plus.

**6.** Composition de caoutchouc pour pneumatique selon l'une quelconque des revendications 1 à 5, dans laquelle la valeur C est 55 ou plus.

**7.** Composition de caoutchouc pour pneumatique selon l'une quelconque des revendications 1 à 6, dans laquelle la valeur A est supérieure à 50.

**8.** Composition de caoutchouc pour pneumatique selon l'une quelconque des revendications 1 à 7, dans laquelle une taille particulaire primaire moyenne de la silice est inférieure à 30 nm.

**9.** Pneumatique comprenant

une bande de roulement qui est constituée d'une première couche dont une surface extérieure comprend une surface formant bande de roulement et d'une seconde couche située sur un côté intérieur de la première couche dans une direction radiale du pneumatique, ou
une bande de roulement qui comprend en outre une ou deux couches intermédiaires entre la première couche et la seconde couche,
dans laquelle la première couche comprend une composition de caoutchouc selon l'une quelconque des revendications 1 à 8.

**10.** Pneumatique selon la revendication 9, dans lequel, quand un rapport d'aspect (%) de la surface de bande de roulement est défini comme F, les valeurs C, E et F satisfont à l'égalité (4) suivante décrite ci-dessous :

$$(C / E) \times F < 10\,000 \quad (4).$$

**11.** Pneumatique selon la revendication 9 ou 10, dans lequel, quand une épaisseur (mm) de la bande de roulement est définie comme G, les valeurs A, B, et G satisfont à l'égalité (5) suivante :

$$(A / B) / G < 1{,}00 \quad (5).$$

**12.** Pneumatique l'une quelconque des revendications 9 à 11, dans lequel le pneumatique est un pneumatique pour service intensif.

FIG. 1

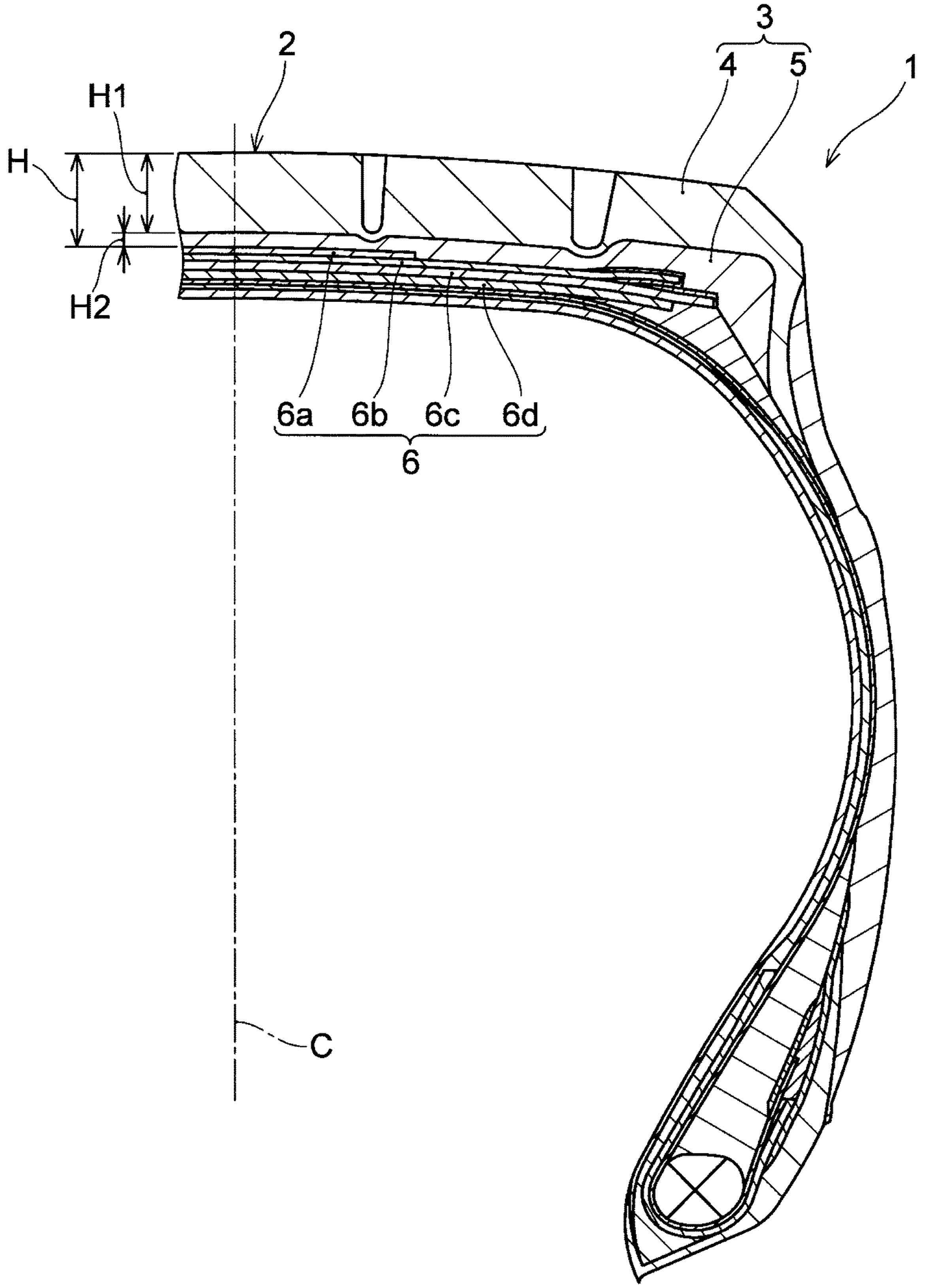

FIG. 2

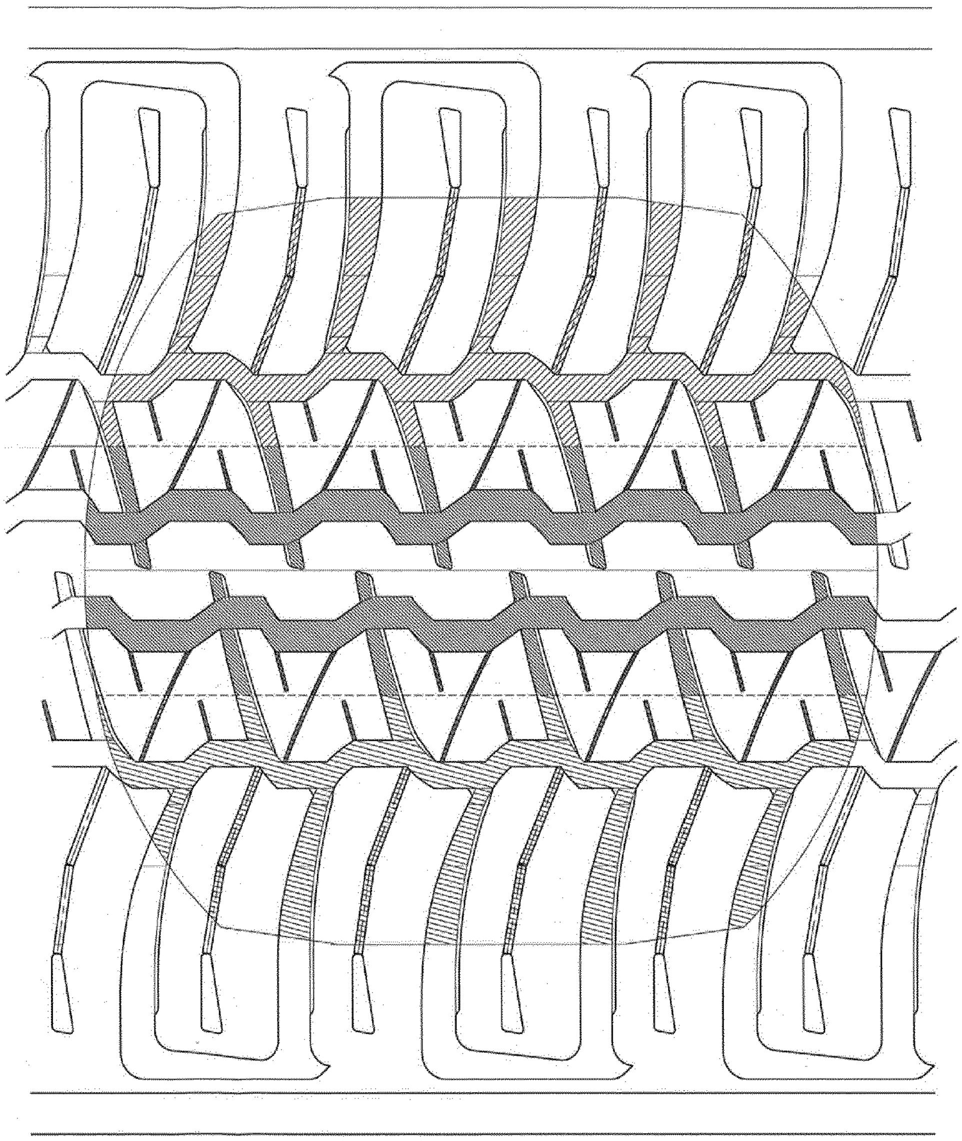

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020117020 A